# EUROPÄISCHE PATENTANMELDUNG

(11) **EP 3 813 216 A1**
(43) Veröffentlichungstag der Anmeldung: **28.04.2021**
(21) Anmeldenummer: 19204874.2
(22) Anmeldetag: 23.10.2019
(51) Int. Cl.: H02J 1/14, H02J 3/36, H02J 13/00, H02J 7/00, H02B 1/00, H02J 1/06

(54) **VORRICHTUNG ZUM STABILISIEREN EINES GLEICHSPANNUNGSNETZES**

(71) Anmelder: Siemens Energy Global GmbH & Co. KG, 81739 München (DE)
(72) Erfinder: Holzapfel, Johann, 2134 Staatz-Kautendorf (AT); Rentschler, Alexander, 64625 Bensheim (DE); Wallner, Christian, 91058 Erlangen (DE)

(57) **Zusammenfassung**

Die Erfindung betrifft eine Stabilisierung eines Gleichspannungsnetzes. Erfindungsgemäß ist eine Vorrichtung (1) zum Stabilisieren einer Gleichspannung in einer Gleichspannungsleitung (DC+DC-) bereitgestellt, umfassend eine Vielzahl von Stabilisierungsmodulen (Sl...Sn), die zum Betrieb der Vorrichtung (1) in einer Reihenschaltung zwischen einem ersten und einem zweiten Gleichspannungspol der Gleichspannungsleitung (DC+DC-) schaltbar sind, wobei jedes Stabilisierungsmodul ein Speichermodul (11) mit einem elektrischen Speicher sowie ein Balancierungsmodul (10) mit steuerbaren Halbleiterschaltern zum Balancieren von Modulspannungen der Stabilisierungsmodule umfasst.

## Beschreibung

Die Erfindung betrifft eine Vorrichtung zum Stabilisieren einer Gleichspannung in einer Gleichspannungsleitung.

Die Energieerzeugung aus erneuerbaren Energiequellen stellt eine bedeutende Herausforderung an die bestehende Infrastruktur der bestehenden Wechselspannungs-Übertragungsnetze dar. Insbesondere stellen lange Übertragungsstrecken zwischen Erzeugern und Verbrauchern, Volatilität der Energieerzeugung aus erneuerbaren Energiequellen sowie Volatilität im Verbrauch und der parallele Betrieb von Wechselspannungs- und Gleichspannungsnetzen neue Anforderungen an technische Lösungen zur Energieübertragung. Gleichstromübertragung mittels Hochspannung (HGÜ) ist eine bekannte Technologie, die insbesondere bei langen Übertragungsstrecken und hohen Übertragungsleistungen in diesem Zusammenhang vorteilhaft ist. Es besteht daher ein hoher Bedarf an technischen Lösungen, die einen stabilen und zuverlässigen Betrieb von künftigen Hochspannungs- und Mittelspannungs-Gleichspannungsnetzen erlauben.

Bisherige Betriebsmittel zur Gewährleistung der Qualität und Stabilität der Energieübertragung bei Parallelbetrieb von Wechselspannungsübertragung und Gleichspannungsübertragung sind im jeweiligen Wechselspannungsnetz angeordnet. Dazu sind insbesondere Blindleistungskompensationsanlagen wie STATCOM oder Synchronous Kondenser zu nennen, die stets an das Wechselspannungsnetz angebunden sind.

Dementsprechend besteht die Aufgabe der Erfindung darin, eine Vorrichtung anzugeben, die eine möglichst kostengünstige und zuverlässige Spannungsstabilisierung im Gleichspannungsnetz ermöglicht.

Die Aufgabe wird erfindungsgemäß durch eine Vorrichtung zum Stabilisieren einer Gleichspannung in einer Gleichspannungsleitung gelöst, umfassend eine Vielzahl von Stabilisierungsmodulen, die zum Betrieb der Vorrichtung in einer Reihenschaltung zwischen einem ersten und einem zweiten Gleichspannungspol der Gleichspannungsleitung schaltbar sind, wobei jedes Stabilisierungsmodul ein Speichermodul mit einem elektrischen Speicher sowie ein Balancierungsmodul mit steuerbaren Halbleiterschaltern zum Balancieren von Modulspannungen der Stabilisierungsmodule umfasst. Die Gleichspannungsleitung wird dabei in der allgemeinen Form verstanden, die begrfflich beispielsweise auch ein Gleichspannungsnetz bzw. einen Teil eines Gleichspannungsnetzes, insbesondere einen Netzknoten eines Gleichspannungsnetzes, umfasst. Die Stabilisierungsmodule sind in Reihe zwischen den Gleichspannungspolen zu schalten. Dies bedeutet, dass die an den Speichermodulen der Stabilisierungsmodule anstehenden Modulspannungen sich zu einer Gesamtspannung der Vorrichtung summieren. Somit kann die erfindungsgemäße Vorrichtung direkt an die Gleichspannungsleitung, beispielsweise eines Mittelsspannungs-Gleichspannungsnetzes (MVDC) angeschlossen werden. Der modulare Aufbau der erfindungsgemäßen Vorrichtung erlaubt eine Anbindung an Netze unterschiedlicher Betriebsspannungen. Mittels der erfindungsgemäßen Vorrichtung kann damit auf eine relativ kostengünstige Weise die Spannung im Gleichspannungsnetz zuverlässig stabilisiert werden. Vorteilhaft kann damit auf zusätzlich stabilisierende Konverterstationen im Gleichspannungsnetz verzichtet werden. Je nach Auslegung kann mittels der erfindungsgemäßen Vorrichtung die Spannung im Gleichspannungsnetz bis zu mehreren Stunden gestützt werden. Ein weiterer Vorteil ergibt sich daraus, dass mittels der erfindungsgemäßen Vorrichtung sowohl kurzzeitige Spannungsschwankungen ausgeglichen als auch eine langzeitige Stabilität gewährleistet werden kann, ohne einen Eingriff in die Regelung der am Gleichspannungsnetz beteiligter Konverterstationen. Die Balancierungsmodule sind dazu eingerichtet, einen Ladungsausgleich zwischen den Speichermodulen unterschiedlicher Stabilisierungsmodule herbeizuführen. Dies hat den Vorteil, dass eine Gleichbelastung der Speichermodule auch bei Einsatz unterschiedlich gearteter Speichermodule bzw. elektrischer Speicher erreicht werden kann. Geeigneterweise können die Balancierungsmodule Halbleiterschalter, beispielsweise Thyristoren und/oder IGBTs umfassen. Mittels der Halbleiterschalter können einzelne Speichermodule zwecks Ladungsausgleich miteinander elektrisch verbunden oder voneinander getrennt werden. Sind Speichermodule miteinander verbunden, so findet eine Umladung zwischen ihnen statt.

Es wird als vorteilhaft angesehen, wenn der elektrische Speicher wenigstens eines der Speichermodule ein Kurzzeitspeicher oder ein Langzeitspeicher ist. Der Vorteil des Kurzzeitspeichers ist eine schnelle Reaktionszeit bei kurzzeitigen Spannungsschwankungen in der Gleichspannungsleitung. Der Vorteil des Langzeitspeichers ist die Möglichkeit einer Spannungsstützung über einen längeren Zeitraum. Besonders vorteilhaft kann es sein, wenn zumindest ein Speichermodul einen Langzeitspeicher und zumindest ein weiteres Speichermodul einen Kurzzeitspeicher umfassen.

Als besonders geeignete Kurzzeitspeicher werden Kondensatoren oder SuperCaps (Superkondensatoren) angesehen. Insgesamt jedoch sind alle Speicher geeignet, die aufgrund einer hohen Leistungsdichte schnell geladen und entladen werden können.

Als Langzeitspeicher sind demgegenüber Batterien, Wasserstoffspeicher, Methanspeicher oder dergleichen geeignet.

Vorzugsweise weisen die elektrischen Speicher jeweils eine Betriebsspannung von 1 kV bis 10 kV, besonders bevorzugt zwischen 1 kV und 4 kV, auf. Auf diese Weise kann erreicht werden, dass durch eine Kaskadierung der Stabilisierungsmodule hohe Spannungen stabilisiert werden können. Zugleich ist ein Potenzialunterschied zwischen benachbarten Stabilisierungsmodulen in der Reihenschaltung noch handelbar, was sich vorteilhaft vor allem auf die Auslegung der Isolationskomponenten der Vorrichtung auswirken kann.

Gemäß einer Ausführungsform der Erfindung umfasst jedes Stabilisierungsmodul ein Elektronikmodul zur Datenerfassung und/oder Datenaustausch von Betriebsdaten des jeweiligen Stabilisierungsmoduls. Eine Datenerfassung der Betriebsdaten erfolgt beispielsweise mittels geeigneter Messvorrichtungen. Die Betriebsdaten können an eine zentrale Datenerfassungseinrichtung übermittelt werden. Die Betriebsdaten können vorteilhaft zu einer Überwachung der Stabilisierungsmodule verwendet werden. Ferner erlaubt der Datenaustausch die Steuerung bzw. Regelung der Spannungsbalancierung der Vorrichtung.

Bevorzugt weist jedes Stabilisierungsmodul eine Spannungsversorgungeinrichtung zur Spannungsversorgung des Balancierungsmoduls und/oder des Elektronikmoduls auf. Die Spannungsversorgungseinrichtung kann derart ausgestaltet sein, dass sie die Versorgungsenergie aus der Betriebsspannung der Vorrichtung abzweigt. Alternativ oder ergänzend ist es möglich, die Energieversorgung aus einer externen Energiequelle zu beziehen. Auf diese Weise kann vorteilhaft auf eine externe bzw. zentrale Energieversorgung mit ggf. langen Zuleitungen verzichtet werden.

Vorzugsweise ist ein Spannungsschutz für jedes Stabilisierungsmodul vorgesehen. Der Spannungsschutz des Stabilisierungsmoduls ist insbesondere dazu vorgesehen, Überschlage zwischen dem Stabilisierungsmodul und dem Erdpotenzial zu verhindern. Er kann zum Beispiel eine Sicherungsschaltung umfassen, die zwischen dem Stabilisierungsmodul und dem Erdpotenzial, beispielsweise einer Tragestruktur der Vorrichtung, angeordnet bzw. geschaltet sein.

Gemäß einer Ausführungsform der Erfindung umfasst die Vorrichtung eine Tragestruktur, in der die Stabilisierungsmodule angeordnet sind, wobei in der Tragestruktur jedem Stabilisierungsmodul ein Modulhalter zugeordnet ist, wobei der Modulhalter einen Modulkurzschließer aufweist, der zum Kurzschließen des zugeordneten Stabilisierungsmoduls eingerichtet ist. Die Tragestruktur kann beispielsweise in Form eines Turmes ausgebildet sein, in dem die einzelnen Stabilisierungsmodule übereinander und/oder nebeneinander angeordnet sind. Für jedes Stabilisierungsmodul kann in der Tragestruktur ein Einbauplatz vorgesehen sein. Der Einbauplatz kann mit entsprechenden Anschlüssen ausgestattet sein, so dass das Stabilisierungsmodul unter Ausbildung der elektrischen Kontakte der Reihenschaltung der Stabilisierungsmodule in die Tragestruktur eingesetzt werden bzw. unter Trennung der Kontakte aus der Tragestruktur entfernt werden. Geeigneterweise ist das Stabilisierungsmodul im Betrieb in den Modulhalter eingesetzt. Der Modulkurzschließer ist dazu eingerichtet, das zugeordnete Stabilisierungsmodul zu überbrücken. Auf diese Weise kann die Vorrichtung auch in einem Fehlerfall eines der Stabilisierungsmodule weiter betrieben werden, indem das fehlerhafte Stabilisierungsmodul mittels des Modulkurzschließers in der Reihenschaltung der Stabilisierungsmodule überbrückt wird. Der Modulkurzschließer kann beispielsweise einen mechanischen Schalter umfassen. Der Modulkurzschließer kann steuerbar sein oder über eine automatische Auslösung verfügen. Die Stabilisierungsmodule sind vorzugsweise einzeln aus der Tragestruktur herausnehmbar.

Vorzugsweise ist wenigstens eines der Stabilisierungsmodule mit der Tragestruktur mittels ausfahrbarer Kontakte mit einem Berührungsschutz verbindbar, so dass das Stabilisierungsmodul während des Betriebs der Vorrichtung aus der Tragestruktur herausnehmbar ist. Der Berührungsschutz kann ein sicheres Entfernen des Stabilisierungsmoduls gewährleisten. Vorteilhaft wird hierdurch erreicht, dass auch bei einem Fehler eines der Stabilisierungsmodule der Betrieb der Vorrichtung nicht unterbrochen werden muss.

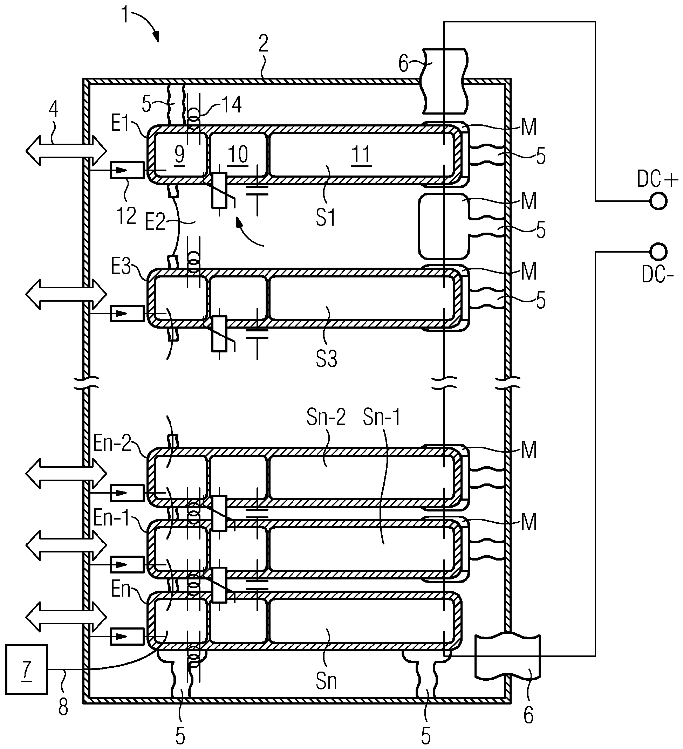

Die Erfindung wird nachfolgend anhand eines in der Figur dargestellten Ausführungsbeispiels weiter erläutert.

Die Figur zeigt ein Ausführungsbeispiel einer erfindungsgemäßen Vorrichtung in einer schematischen Darstellung.

In der Figur ist eine Vorrichtung 1 zum Stabilisieren einer Spannung in einer Gleichspannungsleitung DC+, DC- dargestellt. Die Vorrichtung 1 umfasst eine Tragestruktur 2. Die Tragestruktur 2 umfasst Einbauplätze El...En zum Aufnehmen einzelner Stabilisierungsmodule Sl...Sn. Es ist erkennbar, dass im dargestellten Beispiel der Figur ein zweiter Einbauplatz E2 unbesetzt ist. Die Einbauplätze E1...En-1 weisen jeweils einen Modulhalter 3 auf. Jeder Modulhalter M umfasst einen Modulkurzschließer, der beispielsweise in einem Fehlerfall des zugeordneten Stabilisierungsmoduls diesen überbrücken kann. Das betreffende Stabilisierungsmodul Sl...Sn kann durch Verlagern entlang der mittels eines Doppelpfeils 4 angedeuteten Richtung in den Einbauplatz El...En eingesetzt bzw. daraus entnommen werden.

Die Vorrichtung 1 umfasst ferner eine zentrale Steuerungseinrichtung 7 zur Ansteuerung der Stabilisierungsmodule Sl...Sn bzw. deren Elektronikmodule und Balancierungsmodule und insbesondere deren ansteuerbarer Halbleiterschalter. Die Ansteuerungssignale werden mittels einer optischen Übertragungsleitung 8 an alle Stabilisierungsmodule Sl...Sn übertragen.

Um Wiederholungen zu vermeiden, wird der Aufbau eines der Stabilisierungsmodule anhand des ersten Stabilisierungsmoduls S1 nachfolgend erläutert. Das erste Stabilisierungsmodul S1 umfasst ein Elektronikmodul 9 zur Erfassung und Übermittlung von Betriebsdaten des Stabilisierungsmoduls S1 an die Steuerungseinrichtung 7 sowie zum Empfangen von Ansteuersignalen von der Steuerungseinrichtung 7. Das erste Stabilisierungsmodul S1 umfasst ferner ein Balancierungsmodul 10 sowie ein Speichermodul 11 mit einem elektrischen Speicher. Das Speichermodul 11 ist zusammen mit Speichermodulen der übrigen Stabilisierungsmodule S2...Sn in einer Reihenschaltung zwischen der beiden Gleichspannungspolen DC+, DC- der Gleichspannungsleitung geschaltet. Auf diese Weise kann eine Gesamtspannung erzeugt werden, die der Summe der Modulspannungen aller zugeschalteten Speichermodule entspricht. Das Balancierungsmodul 10 erlaubt eine Umladung bzw. einen Ladungsausgleich zwischen dem Speichermodul 11 und den anderen Speichermodulen der übrigen Stabilisierungsmodule S2...Sn. Des Weiteren ist zwischen der Tragestruktur 2 und dem ersten Stabilisierungsmodul S1 ein Spannungsschutz 12 geschaltet. Das erste Stabilisierungsmodul S1 verfügt ferner über eine Spannungsabsteuerung 13 und eine Spannungsversorgungseinrichtung 14 zur Spannungsversorgung des ersten Stabilisierungsmoduls S1.

Die Isolation der Stabilisierungsmodule Sl...Sn gegenüber der auf Erdpotenzial liegenden Tragestruktur 2 ist durch geeignete Isolationsstützen 5 bereitgestellt. Die aus der Tragestruktur 2 herausführenden Leitungen werden mittels entsprechender (Kabel-)Durchführungen 6 isoliert.

In dem Ausführungsbeispiel der Figur sind die elektrischen Speicher der Speichermodule der Stabilisierungsmodule Sl...Sn-3 Kurzzeitspeicher (insbesondere Superkondensatoren) und die elektrischen Speicher der übrigen Speichermodule Langzeitspeicher (insbesondere Batterien). Auf diese Weise können mittels der Vorrichtung 1 sowohl kurzzeitige Spannungsschwankungen als auch längere Spannungseinbrüche im angeschlossenen Gleichspannungsnetz stabilisiert werden.

## Patentansprüche

1. Vorrichtung (1) zum Stabilisieren einer Gleichspannung in einer Gleichspannungsleitung (DC+DC-) umfassend eine Vielzahl von Stabilisierungsmodulen (Sl...Sn), die zum Betrieb der Vorrichtung (1) in einer Reihenschaltung zwischen einem ersten und einem zweiten Gleichspannungspol der Gleichspannungsleitung (DC+DC-) schaltbar sind, wobei jedes Stabilisierungsmodul ein Speichermodul (11) mit einem elektrischen Speicher sowie ein Balancierungsmodul (10) mit steuerbaren Halbleiterschaltern zum Balancieren von Modulspannungen der Stabilisierungsmodule umfasst.

2. Vorrichtung (1) nach Anspruch 1, wobei der elektrische Speicher wenigstens eines der Speichermodule (11) ein Kurzzeitspeicher oder ein Langzeitspeicher ist.

3. Vorrichtung (1) nach Anspruch 2, wobei der Kurzzeitspeicher ein Kondensator oder ein SuperCap ist.

4. Vorrichtung (1) nach Anspruch 2 oder 3, wobei der Langzeitspeicher eine Batterie, ein Wasserstoffspeicher oder ein Methanspeicher ist.

5. Vorrichtung (1) nach einem der vorangehenden Ansprüche, wobei die elektrischen Speicher jeweils eine Betriebsspannung von 1 kV bis 10 kV aufweisen.

6. Vorrichtung (1) nach einem der vorangehenden Ansprüche, wobei jedes Stabilisierungsmodul ein Elektronikmodul (9) zur Datenerfassung und/oder Datenaustausch von Betriebsdaten des jeweiligen Stabilisierungsmoduls umfasst.

7. Vorrichtung (1) nach einem der vorangehenden Ansprüche, wobei jedes Stabilisierungsmodul eine Spannungsversorgungeinrichtung (14) zur Spannungsversorgung des Balancierungsmoduls und/oder des Elektronikmoduls aufweist.

8. Vorrichtung (1) nach einem der vorangehenden Ansprüche, wobei jedes Stabilisierungsmodul einen Spannungsschutz umfasst.

9. Vorrichtung (1) nach einem der vorangehenden Ansprüche, wobei die Vorrichtung (1) ferner eine Tragestruktur (2) aufweist, in der die Stabilisierungsmodule angeordnet sind, wobei in der Tragestruktur (2) jedem Stabilisierungsmodul ein Modulhalter zugeordnet ist, wobei der Modulhalter (M) einen Modulkurzschließer aufweist, der zum Kurzschließen des zugeordneten Stabilisierungsmoduls eingerichtet ist.

10. Vorrichtung (1) nach Anspruch 9, wobei wenigstens eines der Stabilisierungsmodule mit der Tragestruktur (2) mittels ausfahrbarer Kontakte mit einem Berührungsschutz verbindbar ist, so dass das Stabilisierungsmodul während des Betriebs der Vorrichtung (1) aus der Tragestruktur (2) herausnehmbar ist.
